# EUROPEAN PATENT APPLICATION

(11) **EP 4 797 792 A1**
(43) Date of publication of application: **26.08.2026**
(21) Application number: 23955780.4
(22) Date of filing: 20.10.2023
(51) Int. Cl.: H04W 36/00

(54) **CELL HANDOVER METHODS, TERMINAL DEVICES AND NETWORK DEVICES**

(71) Applicant: Quectel Wireless Solutions Co., Ltd., Shanghai 201601 (CN)
(72) Inventor: ZHAO, Zheng, Shanghai 201601 (CN)
(74) Representative: Fish & Richardson P.C.
(86) International application number: PCT/CN2023/125593
(87) International publication number: WO 2025/081456

(57) **Abstract**

A cell handover method, a terminal device, and a network device are provided. In the method, a terminal device receives first time information. The first time information is configured to indicate a valid time period of a first resource and/or a first control resource set (CORESET) time window, and the first resource is configured to be used by the terminal device to transmit uplink data to a target cell. The embodiments of the present disclosure not only allocate the resource (i.e., the first resource or the resource acquired by the terminal device through the first CORESET time window) for the terminal device to perform uplink data transmission in the target cell, but also configure the valid time period for the resource. The setting of the valid time period is beneficial to reducing the resource occupation time of the terminal device, so as to meet the data transmission requirements of more terminal devices in the target cell.

## Description

### CROSS REFERENCE TO RELATED APPLICATIONS

The present application is a continuation of PCT Patent Application No. PCT/CN2023/125593, entitled "CELL HANDOVER METHOD, TERMINAL DEVICE AND NETWORK DEVICE," filed MONTH DAY, YEAR , which is incorporated by reference herein in its entirety.

### TECHNICAL FIELD

The various embodiments described in this document relate to the technical field of wireless communication, and in particular to a cell handover method, a terminal device and a network device.

### BACKGROUND

In the cell handover process without random access, a target cell can pre-allocate an uplink resource for a terminal device to transmit uplink data. However, the uplink resources of the target cell are limited. If multiple terminal devices hand over to the target cell simultaneously within a short time period, the uplink resources of the target cell may fail to meet the data transmission requirements of the terminal devices.

### SUMMARY

A cell handover method, a terminal device and a network device are provided according to the embodiments of the present disclosure. Various aspects involved in the embodiments of the present disclosure are described below.

In a first aspect, a cell handover method is provided. The method includes: receiving, by a terminal device, first time information. The first time information is configured to indicate a valid time period of a first resource and/or a first control resource set (CORESET) time window, and the first resource is configured to be used by the terminal device to transmit uplink data to a target cell.

In a second aspect, a cell handover method is provided. The method includes: transmitting, by a source cell, first time information to a terminal device. The first time information is configured to indicate a valid time period of a first resource and/or a first control resource set (CORESET) time window, and the first resource is configured to be used by the terminal device to transmit uplink data to a target cell.

In a third aspect, a cell handover method is provided. The method includes: transmitting, by a target cell, first time information to a source cell. The first time information is configured to indicate a valid time period of a first resource and/or a first control resource set (CORESET) time window, and the first resource is configured to be used by a terminal device to transmit uplink data to the target cell.

In a fourth aspect, a terminal device is provided. The device includes: a receiving module, configured to receive first time information. The first time information is configured to indicate a valid time period of a first resource and/or a first control resource set (CORESET) time window, and the first resource is configured to be used by the terminal device to transmit uplink data to a target cell.

In a fifth aspect, a network device is provided, the network device is a network device corresponding to a source cell, and the network device includes: a transmitting module, configured to transmit first time information to a terminal device. The first time information is configured to indicate a valid time period of a first resource and/or a first control resource set (CORESET) time window, and the first resource is configured to be used by the terminal device to transmit uplink data to a target cell.

In a sixth aspect, a network device is provided, the network device is a network device corresponding to a target cell, and the network device includes: a transmitting module, configured to transmit first time information to a source cell. The first time information is configured to indicate a valid time period of a first resource and/or a first control resource set (CORESET) time window, and the first resource is configured to be used by the terminal device to transmit uplink data to the target cell.

In a seventh aspect, a terminal device is provided. The terminal device includes a transceiver, a memory and a processor, the memory is configured to store a program, and the processor is configured to call the program from the memory and control the transceiver to receive or transmit a signal, and cause the terminal device to implement the method according to the first aspect.

In an eighth aspect, a network device is provided. The network device includes a transceiver, a memory and a processor, the memory is configured to store a program, and the processor is configured to call the program from the memory and control the transceiver to receive or transmit a signal, and cause the network device to implement the method according to the second aspect.

In a ninth aspect, a network device is provided. The network device includes a transceiver, a memory and a processor, the memory is configured to store a program, and the processor is configured to call the program from the memory and control the transceiver to receive or transmit a signal, and cause the network device to implement the method according to any one of the first aspect, the second aspect and the third aspect.

In a tenth aspect, a device is provided. The device includes a processor configured to call a program from a memory, and cause the device to implement the method according to any one of the first aspect, the second aspect and the third aspect.

In an eleventh aspect, a chip is provided. The chip includes a processor configured to call a program from a memory, to cause a device mounted with the chip to implement the method according to any one of the first aspect, the second aspect, or the third aspect.

In a twelfth aspect, a computer-readable storage medium is provided. A program is stored on the computer-readable storage medium, to cause a computer to implement the method according to any one of the first aspect, the second aspect or the third aspect.

In a thirteenth aspect, a computer program product is provided. The computer program product includes a program causing a computer to implement the method according to any one of the first aspect, the second aspect or the third aspect.

In a fourteenth aspect, a computer program is provided, and causes a computer to implement the method according to any one of the first aspect, the second aspect or the third aspect.

According to the embodiments of the present disclosure, the resource for the terminal device is allocated to perform uplink data transmission in the target cell (i.e., the first resource mentioned above), at the same time the valid time period is configured for the resource. The setting of the valid time period is beneficial to reducing the resource occupation time of the terminal device, so as to meet the data transmission requirements of more terminal devices in the target cell.

### BRIEF DESCRIPTION OF THE DRAWINGS

FIG. 1 is a schematic diagram of a system architecture of a wireless communication system applied to the embodiments of the present disclosure.
FIG. 2 is a schematic flowchart of handover without random access.
FIG. 3A is a schematic flowchart of an allocation method of uplink resources.
FIG. 3B is a schematic flowchart of another allocation method of uplink resources.
FIG. 4 is a schematic flowchart of a cell handover method provided by an embodiment of the present disclosure.
FIG. 5A is a schematic diagram of a start moment of a handover timer provided by an embodiment of the present disclosure.
FIG. 5B is a schematic diagram of a start moment of a handover timer provided by another embodiment of the present disclosure.
FIG. 6 is a schematic diagram of running time of a first timer provided by an embodiment of the present disclosure.
FIG. 7 is a schematic flowchart of a specific implementation of the cell handover method shown in FIG. 4.
FIG. 8 is a schematic flowchart of a cell handover method provided by another embodiment of the present disclosure.
FIG. 9 is a schematic flowchart of a method of transmitting uplink data based on a first resource.
FIG. 10 is a schematic flowchart of another method of transmitting uplink data based on a first resource.
FIG. 11 is a schematic structural diagram of a terminal device provided by an embodiment of the present disclosure.
FIG. 12 is a schematic structural diagram of a network device provided by an embodiment of the present disclosure.
FIG. 13 is a schematic structural diagram of a network device provided by another embodiment of the present disclosure.
FIG. 14 is a schematic structural diagram of a communication device provided by an embodiment of the present disclosure.

### DETAILED DESCRIPTION OF THE EMBODIMENTS

The technical solutions in the embodiments of the present disclosure will be clearly and completely described with reference to the accompanying drawings in the embodiment of the present disclosure. Obviously, the described embodiments are only a part of the embodiments of the present disclosure, rather than all the embodiments.

### System Architecture of Communication System

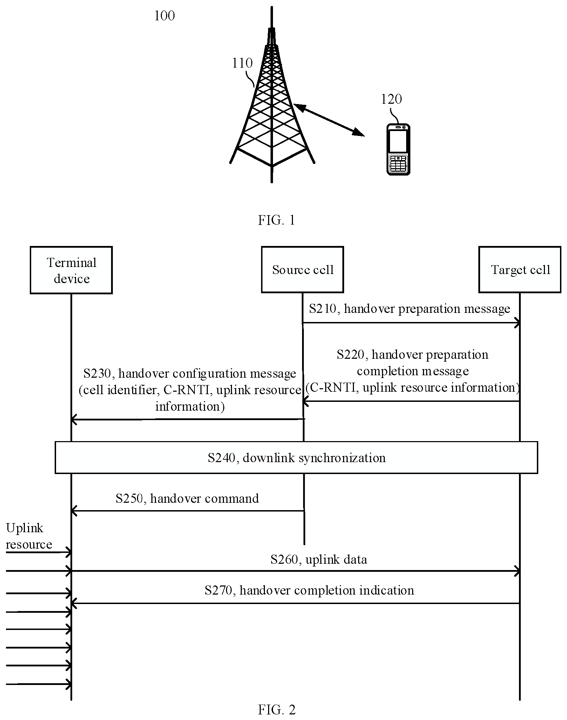

FIG. 1 is a schematic diagram of a system architecture of a wireless communication system 100 applied to the embodiments of the present disclosure. The wireless communication system 100 includes a network device 110 and a terminal device 120. The network device 110 can provide communication coverage for a specific geographical area and can communicate with terminal devices 120 located in the coverage area.

FIG. 1 exemplarily shows one network device and a terminal device. In some embodiments of the present disclosure, the communication system 100 may include one or more network devices 110 and/or one or more terminal devices 120. For a network device 110, the one or more terminal devices 120 may all be located within the network coverage area of the network device 110, all be located outside the network coverage area of the network device 110, or some be located within the coverage area of the network device 110 and the other be located outside the network coverage area of the network device 110, which is not limited by the embodiments of the present disclosure.

In some embodiments, the wireless communication system 100 may further include other network entities such as a network controller and a mobility management entity, which is not limited by the embodiments of the present disclosure.

It should be understood that the technical solutions in the embodiments of the present disclosure may be applied to various communication systems, such as a 5th-generation (5G) system, a new radio (NR) system, a long term evolution (LTE) system, a LTE frequency division duplex (FDD) system, and a LTE time division duplex (TDD) system. The technical solution according to the embodiments of the present disclosure may be applied to a future communication system, for example, a 6th-generation (6G) mobile communication system, or a satellite communication system.

The terminal device mentioned in the embodiments of the present disclosure may also be referred to as user equipment (UE), access terminal, user unit, user station, mobile station (MS), mobile terminal (MT), remote station, remote terminal, mobile device, user terminal, terminal device, wireless communication device, user agent or user device, etc. In some embodiments, the terminal device may be a device that provides voice and/or data connectivity to a user, and may be configured to connect people, things and machines, such as a handhold device and a vehicle-mounted device, etc with wireless connection function. The terminal device in the embodiments of the present disclosure may be a mobile phone, a tablet computer (Pad), a notebook computer, a personal digital assistant, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, and a wireless terminal in smart home, etc. In some embodiments, the UE may act as a base station. For example, the UE may act as a scheduling entity, which provides a sidelink signal between UEs in vehicle-to-everything (V2X) or device-to-device (D2D), etc. For example, a cellular phone and a car communicate with each other using sidelink signals. A cellular phone and a smart home device communicate with each other without relaying communication signals through a base station.

The network device in the embodiments of the present disclosure is a device for communicating with the terminal device. The network device may be referred to as an access network device or a wireless access network device. For example, the network device may be a base station. The network device in the embodiments of the present disclosure may refer to a radio access network (RAN) node (or device) that connects the terminal device to the wireless network. The base station may broadly cover various names as follows, or may be replaced with the following names, such as: NodeB, evolved NodeB (eNB), next generation NodeB (gNB), relay station, access point, transmitting and receiving point (TRP), transmitting point (TP), master evolved NodeB (MeNB), secondary evolved NodeB (SeNB), multi-standard radio (MSR) node, home base station, network controller, access node, wireless node, access point (AP), transmission node, transceiver node, base band unit (BBU), remote radio unit (RRU), active antenna unit (AAU), remote radio head (RRH), central unit (CU), distributed unit (DU), positioning node, etc. The base station may be a macro base station, a micro base station, a relay node, a donor node, or the like, or a combination thereof. The base station may also refer to a communication module, a modem, or a chip installed in the aforementioned device or apparatus. The base station may also be a mobile switching center, a device that undertakes the functions of a base station in device-to-device (D2D), vehicle-to-everything (V2X), machine-to-machine (M2M) communications, a network-side device in a 6G network, and a device that undertakes the functions of a base station in a future communication system, etc. The base station may support networks with the same or different access technologies. The embodiments of the present disclosure do not limit the specific technology and specific device form adopted by the access network device.

The base station may be fixed or mobile. For example, a helicopter or a unmanned aerial vehicle may be configured as a mobile base station, and one or more cells can move according to the position of the mobile base station. In other examples, a helicopter or a unmanned aerial vehicle may be configured as a device to communicate with another base station.

In some examples, the network device according to the embodiments of the present disclosure may be CU or DU, or the network device may include both CU and DU. Alternatively, gNB may further include AAU.

The network device and the terminal device may be deployed on land, including indoors or outdoors, handheld or vehicle-mounted. The network device and the terminal device may be deployed on the water surface. The network device and the terminal device may be deployed on an aircraft, a balloon, or a satellite in the air. The scenarios where the network devices and the terminal devices are located are not limited by the embodiments of the present disclosure.

It should be understood that all or part of the functions of the communication device in the present disclosure may also be implemented by software functions running on hardware, or by virtualization functions instantiated on a platform (such as a cloud platform).

### Cell Handover

In a mobile communication system, when a terminal device moves from a coverage area of one cell to a coverage area of another cell, or due to other reasons such as load sharing of the network device, the terminal device needs to hand over from one cell to another cell. In the handover process, the terminal device needs to initiate a random access to the target cell and then notify the target cell of some of its own information. The target cell identifies the identity of the terminal device, thereby allowing the terminal device to access and continue transmitting the original service bearer data of the terminal device through the target cell. For the terminal device, random access has three functions: acquiring a time advance (TA), acquiring uplink radio resources, and acquiring transmission power spectral density. In some scenarios, the terminal device may not perform random access during handover, that is, the terminal device may perform a handover without random access. For example, in mobility enhanced scenarios, non-terrestrial network (NTN) scenarios, or mobile integrated access backhaul (IAB) scenarios, the terminal device may perform a handover without random access. The cell handover methods in the three scenarios are described in detail below.

### Cell Handover in Mobility Enhanced Scenario

In the mobility enhanced scenarios, the communication system adopts the frequency spectrum of frequency range 2 (FR2). Due to the high frequency of the FR2, the coverage area of a cell is reduced. Therefore, in the FR2, the probability of handover for the terminal device is greatly increased, and random access occurs more frequently. In addition, the communication system adopts a separated CU-DU architecture, and one CU can connect with thousands of DUs. Therefore, most handover processes actually occur inside DUs or between DUs, and generally only a few handover processes occur between CUs. Based on the above background, the handover process in the mobility enhanced scenarios can be enhanced and optimized.

If the handover occurs inside the DU, the network device is aware of the relevant information of the terminal device before and after the handover, such as TA, power, etc. Therefore, if the handover occurs inside the DU, the random access process may be omitted, and the network device may directly allocate an uplink radio resource in the target cell for the terminal device. Accordingly, the terminal device may directly transmit uplink data to the target cell through the uplink radio resource.

If the handover occurs between DUs and inside the CU, the information of the terminal device before and after the handover may be stored in the DU or in the DU. The information stored in the DU may be transmitted to the target DU through the CU, and the information stored in the CU does not need to be transmitted. Due to the difference in transmission delay between the terminal device and the source DU, and between the terminal device and the target DU, the TA value of the terminal device in the source DU is also different from the TA value of the terminal device in the target DU. In this case, the source cell may pre-trigger the terminal device to transmit a preamble to each possible target cell, so as to acquire and store the TA value of the terminal device in each cell. When the handover process is triggered, the terminal device may directly use the pre-acquired TA value, with omitting the random access process. In addition, the network device may directly allocate an uplink radio resource in the target cell for the terminal device, so that the terminal device can directly transmit uplink data to the target cell through the uplink radio resource. In addition, since the communication system adopts orthogonal frequency-division multiplexing (OFDM), the uplink transmission of the terminal device in the target cell does not cause interference to other terminal devices in the target cell, and thus does not cause serious power problems. Therefore, the target cell may perform power control on the terminal device after the handover is completed.

If the handover occurs between CUs, handover with random access needs to be performed.

### Cell Handover in NTN Scenario

In the NTN scenarios, due to the large coverage area of satellite cells and the high moving speed of satellites, a large number of terminal devices need to complete handover within a short time period. In order to simplify the handover process, a handover process without random access may be introduced in the NTN scenarios. Different from the mobility enhanced scenarios, the satellite operates along a fixed orbit, and the moving speed of the satellite is much higher than the moving speed of the terminal device. Therefore, for the terminal device, the target cell can be predetermined. As a result, a terminal device does not need to acquire TA values from multiple candidate target cells, but only needs to obtain the TA value of the predetermined target cell. Before handover, the target cell can pre-allocate an uplink radio resource to the terminal device, so that the terminal device can directly transmit uplink data through the uplink radio resource.

### Cell Handover in Mobile IAB Scenario

In the mobile IAB scenario, since an IAB is connected with multiple terminal devices, if the IAB hands over from one cell to another cell, the terminal devices connected to the IAB also need to hand over together. In this case, the terminal devices can also adopt a handover process without random access, which can significantly reduce the message interaction load of the system.

### Handover Process Without Random Access

Generally, the handover process without random access may be as shown in FIG. 2, including operations S210 to S270.

In S210, the source cell transmits a handover preparation message to the target cell.

In S220, the source cell receives a handover preparation completion message of the target cell. The handover preparation completion message may include a cell-radio network temporary identifier (C-RNTI) and uplink resource information allocated by the target cell to the terminal device.

In S230, the source cell transmits a handover configuration message to the terminal device. The handover configuration message may include a cell identifier and the C-RNTI of the target cell, and the uplink resource information allocated by the target cell to the terminal device.

In S240, the terminal device performs downlink synchronization with the target cell.

In S250, the source cell transmits a handover command for the target cell to the terminal device. The handover command herein may be a lower-layer notification rather than a radio resource control (RRC) message. For example, the handover command may be a medium access control (MAC) control element (CE) or downlink control information (DCI).

In S260, the terminal device transmits uplink data to the target cell based on the uplink resource.

In S270, the target cell transmits a handover completion indication to the terminal device. After receiving the handover completion indication, the terminal device successfully accesses the target cell.

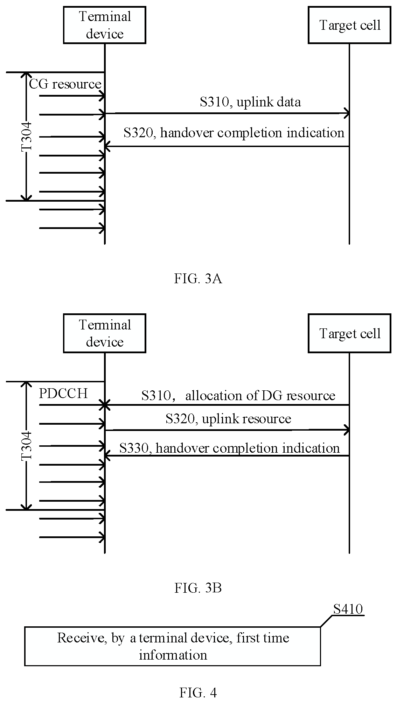

In the related art, there are two methods for the target cell to allocate the uplink resource to the terminal device, as shown in FIG. 3A and FIG. 3B respectively.

In the first allocation method, the target cell may pre-allocate a configured grant (CG) resource to the terminal device. The CG resource is valid immediately after allocation, and the terminal device may transmit uplink data to the target cell through the CG resource. For example, as shown in FIG. 3A, the CG resource allocated by the target cell to the terminal device is periodic, and the terminal device may select one resource from the CG resource to transmit uplink data to the target cell. After the terminal device successfully accesses the target cell, the CG resource pre-allocated by the target cell to the terminal device is invalid. For example, referring to S320 in FIG. 3A, the terminal device receives the handover completion indication of the target cell, and both the terminal device and the target cell consider the CG resource invalid. After the CG resource is invalid, the terminal device no longer uses the CG resource to transmit the uplink data. Therefore, the target cell may allocate the CG resource to other terminal devices for use. In addition, the terminal device may start a timer T304 (a type of handover timer) after receiving the handover command. If the timer T304 expires, the CG resource may also be considered invalid. For example, referring to FIG. 3A, after the timer T304 expires, both the target cell and the terminal device may consider the CG resource allocated to the terminal device invalid.

In the second allocation method, the target cell may pre-allocate a dedicated CORESET to the terminal device for the terminal device to monitor a physical downlink control channel (PDCCH). The terminal device may transmit data to the target cell through a dynamic grant (DG) resource indicated by the DCI in the PDCCH. For example, as shown in FIG. 3B, the CORESET allocated by the target cell to the terminal device is periodic. After completing downlink synchronization with the target cell, the terminal device may continuously monitor the DCI to acquire the uplink DG resource dynamically allocated by the target cell. In S310, the terminal device acquires the allocation information of the DG resource. In S320, the terminal device transmits uplink data on the DG resource. After the terminal device successfully accesses the target cell, the CORESET pre-allocated by the target cell to the terminal device is invalid. For example, in S330 shown in FIG. 3B, when the terminal device receives the handover completion indication of the target cell, both the terminal device and the target cell consider the CORESET invalid. In addition, the terminal device may start a timer T304 after receiving the handover command. If the timer T304 expires, the CORESET may also be considered invalid. For example, regarding T304 shown in FIG. 3B, both the target cell and the terminal device may consider that the PDCCH space (i.e., CORESET) is invalid after T304 expires, and the terminal device no longer monitors the DCI in the PDCCH space.

In the cell handover process without random access, the target cell may pre-allocate the uplink resource (such as the above CG resource) to the terminal device. However, the uplink resources of the target cell are limited. If multiple terminal devices hand over to the target cell simultaneously within a short time period, the uplink resources of the target cell may fail to meet the data transmission requirements of the terminal devices.

Based on the above problems, the embodiments of the present disclosure are described in detail.

As shown in FIG. 4, a cell handover method is provided according to an embodiment of the present disclosure. Referring to FIG. 4, in S410, the terminal device receives first time information. The first time information is configured to indicate a valid time period of a first resource and/or a first CORESET time window. The first resource is configured to be used by the terminal device to transmit uplink data to the target cell. For example, the first resource is configured to be used by the terminal device to transmit the first N (e.g., the first one) pieces of uplink data to the target cell. For another example, the first resource is configured to be used by the terminal device to transmit uplink data to the target cell during the handover process from the source cell to the target cell. The first CORESET time window is configured to be used by the terminal device to monitor the DCI on the PDCCH, so as to acquire the uplink resource (e.g., the DG resource) allocated by the target cell to the terminal device, and the terminal device may transmit uplink data to the target cell on the uplink resource.

The first resource is a CG resource or a DG resource. The first resource is a resource pre-allocated by the target cell to the terminal device.

In some implementations, the terminal device receives configuration information of the first resource. The configuration information of the first resource and the first time information may be transmitted simultaneously, or transmitted separately.

In some implementations, the source cell transmits the first time information and/or the configuration information of the first resource to the terminal device through a handover configuration message or a handover command. Alternatively, in other implementations, the source cell transmits the first time information and/or the configuration information of the first resource to the terminal device through other dedicated messages. The valid time period of the first resource and/or the first CORESET time window may include one or more consecutive time periods, and the multiple consecutive time periods may have the same time period length or different time period lengths.

The embodiments of the present disclosure not only allocate resources for the terminal device to perform uplink data transmission in the target cell (i.e., the first resource or the resource acquired by the terminal device through the first CORESET time window mentioned herein), but also configure a valid time period for the resource. The setting of the valid time period is beneficial to reducing the resource occupation time of the terminal device, so as to meet the data transmission requirements of more terminal devices in the target cell.

The content and/or format of the first time information are described in detail below by way of examples.

In some implementations, the first time information includes one or more of the following: a start moment of the valid time period, an end moment of the valid time period, and a time length of the valid time period.

For example, the first time information includes a start moment of the valid time period and an end moment of the valid time period, and the first resource is valid between the start moment and the end moment.

For another example, the first time information includes a start moment of the valid time period and a time length of the valid time period, and the first resource is valid from the start moment for the duration of the time length.

In some implementations, the first time information includes or indicates the activation time of the first resource. For example, the first time information includes a delay time. After the terminal device receives the handover command, the first resource is valid after the delay time elapses.

The start moment or the end moment of the first resource may be represented based on relative time and/or absolute time. Relative time refers to the local time of the target cell. For example, the relative time includes one or more of hyperframe number, system frame number (SFN), and slot number of the target cell. For example, the start moment of the first resource may be the 3rd subframe in the 365th radio frame of the target cell. Absolute time refers to the time based on the world clock. For example, the start moment of the first resource may be 15:19:34:324 on September 20, 2023.

The first time information is transmitted by the target cell to the target cell, and transparently transmitted to the terminal device through the source cell. Alternatively, the first time information is determined by the source cell based on time information transmitted by the target cell (for example, the source cell may parse and reconstruct the time transmitted by the target cell to acquire the first time information). In this case, the first time information is different from the time information transmitted by the target cell in a time representation format. For example, if the time information transmitted by the target cell is represented by relative time, the source cell may convert the time information to represent the time information by absolute time.

Further, in some implementations, the time representation format corresponding to the first time information is a time representation format supported by the terminal device. For example, if the time representation format supported by the terminal device is absolute time, the time representation format corresponding to the first time information is also absolute time. The source cell decides whether to convert the time information transmitted by the target cell according to the time representation format supported by the terminal device. For example, if the terminal device supports the time representation format of the time information, the source cell may directly transparently transmit the time information to the terminal device as the first time information without converting the time information. For another example, if the terminal device does not support the time representation format of the time information, the source cell may convert the time in the time information into a format supported by the terminal device, and then transmit the converted time information to the terminal device as the first time information. Based on this, the problem of handover failure caused by the terminal device being unable to recognize the first time information can be avoided.

Further, in some implementations, the terminal device may report the time representation format it supports to the source cell. For example, the terminal device reports the time representation format it supports through a capability parameter. A value of the capability parameter is a value with a fixed meaning. For example, when the value of the capability parameter is 0, it indicates that the terminal device supports the time representation format using relative time. When the value of the capability parameter is 1, it indicates that the terminal device supports the time representation format using absolute time.

Whether the first resource is invalid is determined based on a handover timer. For example, if the handover timer does not expire, it indicates that the first resource is valid. If the handover timer expires, it indicates that the first resource is invalid. The handover timer mentioned herein may be timer T304 as shown in FIG. 3, or a newly introduced handover timer for the embodiments of the present disclosure, which is not limited by the present disclosure.

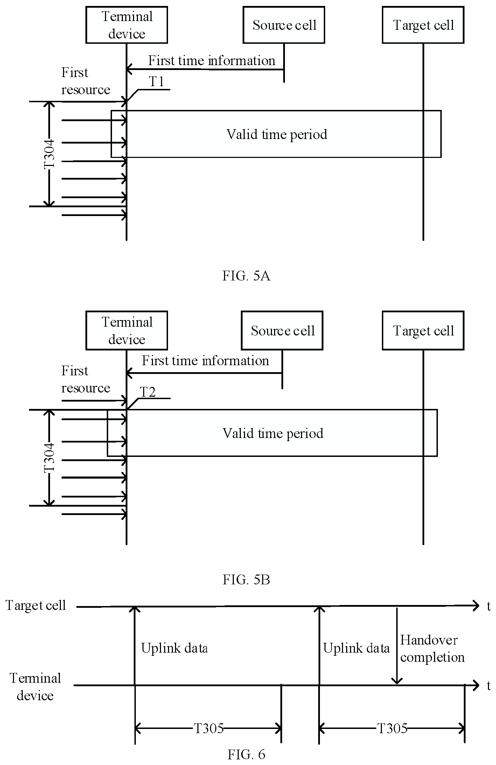

A start moment of the handover timer is determined based on one or more of the following: a start moment of the valid time period, and a transmission moment of a first valid resource in the first resource. For example, the terminal device starts the handover timer at the start moment of the valid time period of the first resource and/or the first CORESET time window. If the timer expires, the first resource and/or the first CORESET time window is invalid. For another example, the terminal device starts the handover timer at the transmission moment of the first valid resource in the first resource. If the timer expires, the first resource is invalid. As shown in FIG. 5, taking the handover timer as T304 for example, the transmission moment of the first valid resource in the first resource is T1 (FIG. 5A), and the start moment of the valid time period is T2 (FIG. 5B). The terminal device may start T304 at T1 as shown in FIG. 5A. Alternatively, the terminal device may start T304 at T2 as shown in Fig. 5B. Associating the start moment of the handover timer with the start moment of the valid time period or the start moment of the valid resource facilitates the terminal device to acquire more handover time and improve the handover success rate.

Further, in some implementations, the start moment of the handover timer is specified by a protocol or configured by the network device. If the start moment is configured by the network device, a base station corresponding to the target cell decides to notify the source cell, and the source cell subsequently notifies the terminal device (through a handover command or other control messages). For example, the base station corresponding to the target cell may decide that the start moment of the handover timer is determined based on the start moment of the valid time period, and the terminal device starts the handover timer at the start moment of the valid time period.

Optionally, running time of the handover timer is associated with the valid time period. If the running time of the handover timer reaches a period outside the valid time period, the terminal device may pause the handover timer. If there is a next valid time period, the terminal device may resume the handover timer at a start moment of the next valid time period. After resuming, the handover timer may continue running from the last pause moment to adapt to the valid time period of the first resource and/or the first CORESET time window. The running time of the handover timer may also be unassociated with the valid time period, that is, the handover timer may ignore the valid time period and keep timing until it expires.

Further, whether the running time of the handover timer is associated with the valid time period may be specified by a protocol or configured by the network device. If the running time is configured by the network device, it is decided by the base station corresponding to the target cell and is notified the source cell, and the source cell subsequently notifies the terminal device (through a handover command or other control messages).

In addition, whether the handover fails may also be determined based on the handover timer, and handover failure may be indicated by the timeout of the handover timer. If the handover timer expires, the terminal device considers the handover failed.

After the terminal device transmits uplink data to the target cell on the first resource, the terminal device may determine handover success based on the handover completion indication transmitted by the target cell. If the terminal device receives the handover completion indication of the target cell, it considers the handover successful.

In some implementations, the handover completion indication transmitted by the target cell to the terminal device may be transmitted based on dynamic scheduling. For example, the target cell transmits the handover completion indication through a physical downlink shared channel (PDSCH) indicated by the DCI on the PDCCH. For example, after transmitting the uplink resource to the target cell, the terminal device detects the PDCCH to acquire the DCI and wait for the handover completion indication transmitted on the PDSCH indicated by the DCI. In addition, the target cell instructs the terminal device to transmit new uplink data based on dynamic scheduling. For example, the target cell instructs the terminal device to transmit new uplink data on the physical uplink shared channel (PUSCH) through the DCI on the PDCCH.

In other implementations, the handover completion indication transmitted by the target cell to the terminal device is transmitted based on semi-persistent scheduling. The target cell may carry the handover completion indication in a second resource, where the second resource may be one or more resources after the first resource. For example, the target cell may pre-configure one or more PDSCH resources after the first resource to transmit the handover completion indication to the terminal device. If the first resource is a CG resource, the PDSCH resource is referred to as a configured grant-semi-persistent scheduling (CG-SPS) resource. The terminal device decodes the resources after the first resource, determines whether there is a data block transmitted by the target cell, and further determines whether the data block transmitted by the target cell is a handover completion indication. If the terminal device acquires the handover completion indication in the second resource, it considers the handover successful, otherwise, it considers the handover failed. In this way, the terminal device does not need to monitor the dynamic grant resources.

Further, a time-frequency position of the second resource is indicated to the terminal device through the handover command transmitted by the source cell. For example, the target cell indicates the time-frequency position of the second resource to the source cell through the handover preparation completion message, and then the source cell indicates it to the terminal device through the handover command. Based on this, the terminal device may decode the time-frequency position of the second resource to receive the handover completion indication, which is beneficial to improving the efficiency of the terminal device in acquiring the handover completion indication.

Alternatively, a time-frequency position of the second resource is determined based on a mapping relationship between time-frequency positions of the first resource and the second resource. The time-frequency positions of the first resource may be in one-to-one mapping with the time-frequency positions of the second resource. For example, the second resource may be the 2nd subframe after the first resource, and the frequency domain positions of the second resource are also in a one-to-one correspondence with the frequency domain positions of the first resource. The time-frequency positions of the first resource may be in one-to-many mapping with the time-frequency positions of the second resource. For example, the second resource may be the 2nd, 5th, and 8th subframes after the first resource, and the frequency domain positions of the second resource correspond to the frequency domain positions of the first resource. Further, the mapping relationship between the time-frequency positions of the first resource and the second resource may be specified by a protocol. Based on the mapping relationship between the time-frequency positions of the first resource and the second resource, blind decoding by the terminal device can be avoided, which is beneficial to improving the efficiency of the terminal device in acquiring the handover completion indication.

How the terminal device detects the handover completion indication of the target cell is described below. After the terminal device transmits the uplink data to the target cell based on the first resource, the terminal device starts a first timer and detects the handover completion indication during a running period of the first timer. For example, the terminal device decodes the time-frequency position of the second resource during the running period of the first timer. For another example, the terminal device detects the PDCCH to acquire the DCI during the running period of the first timer. If the terminal device detects the handover completion indication during the running period of the first timer, the terminal device considers the handover successful and stops the first timer. If the first timer expires, the terminal device stops detecting the handover completion indication. A length of the first timer may be specified by a protocol or configured by the network device. If the length is configured by the network device, the length may be determined by the target cell and then notified to the source cell, and the source cell subsequently notifies the terminal device through the handover command.

After the first timer expires, if the first resource still includes a valid resource, the terminal device continues to transmit uplink data to the target cell based on the valid resource and wait for the handover completion indication of the target cell. For example, the first timer may be the timer T305 as shown in FIG. 6. As shown in FIG. 6, after the terminal device transmits the uplink data, it still does not receive the handover completion indication until the first T305 expires. At this point, the first resource still includes the valid resource, so the terminal device may continue to transmit uplink data to the target cell on the valid resource and restarts a timer T305 to wait for the handover completion indication of the target cell. In this way, the terminal device can attempt to transmit uplink data multiple times within the valid time period, which is beneficial to improving the handover success rate.

After the first timer expires, if the first resource does not include a valid resource and the handover timer does not expire, the terminal device establishes a connection with the target cell by random access. After the first resource is invalid, the terminal device no longer performs handover without random access to enter the target cell. However, if the handover timer does not expire, the terminal device may attempt to perform handover with random access, which is beneficial to improving the handover success rate.

After the first timer expires, if the first resource does not include a valid resource and the handover timer expires, the terminal device performs cell reselection. If the handover timer expires, the current handover is considered failed, and the terminal device may reselect a target cell and initiate the RRC re-establishment process.

In addition, if the terminal device uses a discontinuous reception (DRX) mechanism in the target cell, the time during which the terminal device detects the handover completion indication is included in the DRX active time period of the terminal device, and the running time of the first timer is also included in the DRX active time period of the terminal device.

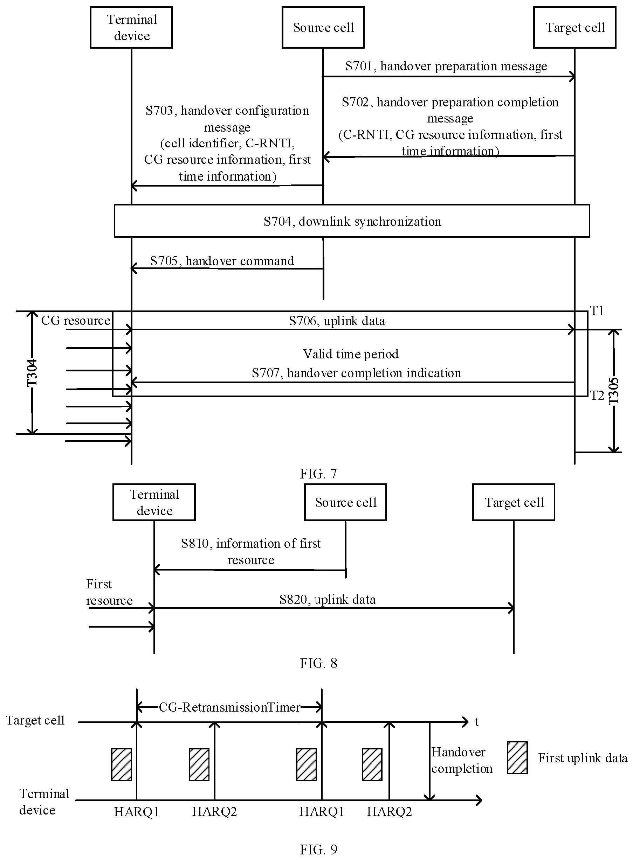

As an example, the cell handover method provided by an embodiment of the present disclosure is described with reference to FIG. 7. The cell handover process shown in FIG. 7 includes operations S701 to S707.

In S701, the source cell transmits a handover preparation message to the target cell.

In S702, the source cell receives a handover preparation completion message of the target cell. The message includes C-RNTI, CG resource information (first resource) allocated by the target cell to the terminal device, and first time information. The first time information includes a start moment T1 and an end moment T2 of the CG resource, and the time representation format of T1 and T2 is the same as the time representation format supported by the terminal device.

In S703, the source cell transmits a handover configuration message to the terminal device. The message includes a cell identifier and C-RNTI of the target cell, CG resource information allocated by the target cell to the terminal device, and first time information.

In S704, the terminal device performs downlink synchronization with the target cell.

In S705, the source cell transmits a handover command for the target cell to the terminal device.

In S706, the terminal device transmits uplink data to the target cell based on the CG resource.

In S707, the target cell transmits a handover completion indication to the terminal device. The handover completion indication is carried on the PDSCH after the CG resource. The terminal device determines the time-frequency position of the PDSCH based on the mapping relationship between the PDSCH and the CG resource specified by the protocol, and decodes at the time-frequency position to receive the handover completion indication. After receiving the handover completion indication, the terminal device determines that the handover is successful.

In addition, the terminal device starts the handover timer T304 at the start moment of the valid time period, and starts the first timer T305 after transmitting the uplink data.

In the handover process shown in FIG. 7, outside the valid time period, the terminal device cannot transmit uplink data through the CG resource allocated by the target cell. Therefore, the target cell can allocate the CG resources outside the valid time period to other terminal devices, which improves resource utilization, thereby avoiding the problem of resource shortage.

The method in which the target cell allocates the first resource to the terminal device in the handover process is described in detail above with reference to FIG. 1 to FIG. 7. The method in which the terminal device transmits uplink data based on the first resource is described in detail below with reference to FIG. 8. It should be understood that the embodiment shown in FIG. 8 and the embodiments shown in FIG. 1 to FIG. 7 may be independent of each other or combined with each other.

FIG. 8 is a schematic flowchart of a cell handover method provided by another embodiment of the present disclosure. The cell handover process shown in FIG. 8 includes operations S810 to S820.

In S810, the terminal device receives information of the first resource transmitted by the source cell. The first resource is configured to be used by the terminal device to transmit uplink data to the target cell, and the first resource corresponds to one or more hybrid automatic repeat request (HARQ) processes.

In S820, the terminal device transmits uplink data to the target cell based on the first resource.

In some implementations, each resource in the first resource is configured to transmit same uplink data. After transmitting the uplink data through the first resource, the terminal device retransmits the uplink data through the next first resource before receiving the handover completion indication, regardless of whether the HARQ process corresponding to the next first resource is the same as the HARQ process corresponding to the previous first resource. For example, as shown in FIG. 9, the first resource (CG resource) corresponds to multiple HARQ processes, such as HARQ process 1 and HARQ process 2. Before receiving the handover completion indication, the terminal device repeatedly transmits the same uplink data (first uplink data) through the HARQ process 1 and the HARQ process 2.

Based on this, before receiving the handover completion indication, if the terminal device receives a retransmission scheduling transmitted by the target cell, the terminal device retransmits the currently unique piece of uplink data. If the terminal device receives a new transmission scheduling transmitted by the target cell and considers that the current handover is not completed, the terminal device still retransmits the currently unique piece of uplink data. In addition, the target cell performs HARQ combining on the data received on each resource of the first resource, which increases the probability that the target cell successfully decodes the uplink data, thereby improving the handover success rate.

Further, whether the terminal device transmits the same uplink data in different HARQ processes is specified by a protocol or indicated by the network device (for example, indicated through the handover command).

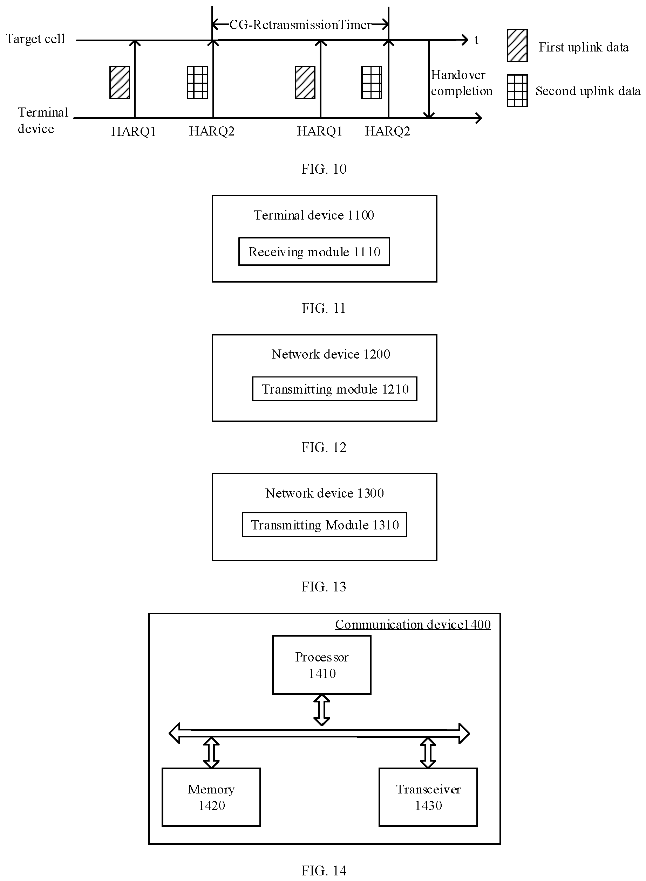

In other implementations, resources in the first resource corresponding to a same HARQ process are all configured to transmit the same uplink data. For example, as shown in FIG. 10, the first resource (CG resource) corresponds to multiple HARQ processes, such as HARQ process 1 and HARQ process 2. Before receiving the handover completion indication, the terminal device repeatedly transmits the first uplink data and the second uplink data through the HARQ process 1 and the HARQ process 2, respectively. The terminal device always transmits the same uplink data on the same HARQ process corresponding to the first resource, which results in minor modifications to the HARQ processes of both the base station and the terminal device, thereby transmitting more uplink data.

The ways of transmitting the uplink data shown in FIG. 9 and FIG. 10 are equivalent to setting the time of the configuration-grant retransmission timer (CG-RetransmissionTimer) to the time length between the CG resources corresponding to two HARQ processes 1 (or two HARQ processes 2).

In some implementations, in the above cell handover method, the terminal device may determine and report third information. The third information includes one or more of the following: handover delay from the source cell to the target cell, and the number of valid resources included in or used by the terminal device during a handover process from the source cell to the target cell.

The handover delay from the source cell to the target cell is described below.

In some implementations, the handover delay from the source cell to the target cell may not include a time period during which the first resource is invalid in the handover process, which is beneficial to improving the accuracy of the handover delay. In this case, the handover delay from the source cell to the target cell may be determined based on the running period of the handover timer, and the time during which the handover timer is suspended may not be included in the handover delay.

In other implementations, the handover delay from the source cell to the target cell may include a time period during which the first resource is invalid in the handover process. In this case, the handover delay from the source cell to the target cell may be determined based on the start moment of the handover timer to the moment when the handover is completed, that is, the handover delay includes the time during which the handover timer is suspended.

The number of valid resources included in or used by a handover process of the terminal device from the source cell to the target cell is described below.

The number of valid resources included in the handover process of the terminal device from the source cell to the target cell refers to the number of valid resources that the terminal device has passed through in time from the start of the handover to the success of the handover. The number of valid resources is denoted as N, where N is a positive integer greater than or equal to 1. The number of valid resources used by the handover process of the terminal device from the source cell to the target cell refers to the number of valid resources that the terminal device has attempted to transmit uplink data from the start of the handover to the success of the handover. The number of valid resources is denoted as M, where M is a positive integer greater than or equal to 1. The terminal device nay report the above number N or M of valid resources to the network device, and the network device may adjust the handover process based on N or M, which is beneficial to improving the efficiency of the handover.

In some implementations, the target cell pre-allocates DRX for the terminal device. The target cell notifies the source cell of the pre-allocated DRX for the terminal device, and then the source cell notifies the terminal device of it through the handover command. Alternatively, the target cell transparently transmits the pre-allocated DRX for the terminal device to the terminal device. Further, when the first resource is a DG resource, if the DRX is configured, the terminal device may only monitor the PDCCH during the DRX active time period, so the base station can only transmit the DCI to the terminal device during the DRX active time period to allocate the first resource. In this case, the time that the terminal device waits for the DRX active time period should also be included in the handover delay.

The method embodiments of the present disclosure have been described in detail above in combination with FIG. 1 to FIG. 10. The device embodiments of the present disclosure will be described in detail in combination with FIG. 11 to FIG. 14 below. It should be understood that the descriptions of the device embodiments correspond to the description of the method embodiments. Therefore, for the parts that are not described in detail, reference may be made to the previous method embodiments.

FIG. 11 is a schematic structural diagram of a terminal device provided by an embodiment of the present disclosure. The terminal device 1100 shown in FIG. 11 includes a receiving module 1110 configured to receive first time information. The first time information is configured to indicate a valid time period of a first resource and/or a first control resource set (CORESET) time window, and the first resource is configured to be used by the terminal device to transmit uplink data to a target cell.

In some embodiments, the first time information includes at least one of the following: a start moment of the valid time period, an end moment of the valid time period, a time length of the valid time period, and activation time of the first resource.

In some embodiments, the start moment or the end moment is represented based on at least one of the following: relative time, including at least one of hyperframe number, system frame number and slot number of the target cell, and absolute time.

In some embodiments, the valid time period includes at least one consecutive time periods.

In some embodiments, the first time information is transmitted by the target cell, and transparently transmitted to the terminal device through a source cell, or the first time information is determined by a source cell based on time information transmitted by the target cell, and a time representation format of the first time information is different from that of the time information.

In some embodiments, the time representation format corresponding to the first time information is a time representation format supported by the terminal device.

In some embodiments, whether the first resource is invalid is determined based on a handover timer, and a start moment of the handover timer is determined based on at least one of the following: a start moment of the valid time period, and a transmission moment of a first valid resource in the first resource.

In some embodiments, whether the first resource is invalid is determined based on a handover timer, and running time of the handover timer is associated with the valid time period.

In some embodiments, in response to the running time of the handover timer reaching a time period outside the valid time period, the handover timer pauses running.

In some embodiments, whether the first resource is invalid is determined based on a handover timer, and running time of the handover timer is not associated with the valid time period.

In some embodiments, a handover completion indication transmitted by the target cell to the terminal device is transmitted based on dynamic scheduling.

In some embodiments, a handover completion indication transmitted by the target cell to the terminal device is transmitted based on semi-static scheduling.

In some embodiments, the handover completion indication is carried in a second resource, and a time-frequency position of the second resource is indicated by a handover command transmitted by a source cell, or determined based on a mapping relationship between time-frequency positions of the first resource and the second resource.

In some embodiments, the terminal device 1100 further includes a start module 1120 and a detection module 1130. The start module 1120 is configured to start a first timer after the terminal device transmits uplink data to the target cell based on the first resource. The detection module 1130 is configured to detect a handover completion indication during a running period of the first timer.

In some embodiments, after the first timer expires, if the first resource still includes a valid resource, the terminal device transmits uplink data to the target cell based on the valid resource. Alternatively, after the first timer expires, if the first resource does not include a valid resource and the handover timer does not expire, the terminal device establishes a connection with the target cell by random access, or after the first timer expires, if the first resource does not include a valid resource and the handover timer expires, the terminal device performs cell reselection.

In some embodiments, the first resource corresponds to at least one hybrid automatic repeat request (HARQ) process, and each resource in the first resource is configured to transmit same uplink data.

In some embodiments, the first resource corresponds to at least one hybrid automatic repeat request (HARQ) process, and resources corresponding to a same HARQ process in the first resource are configured to transmit same uplink data.

In some embodiments, the terminal device 1100 further includes a determination module 1140. The determination module 1140 is configured to determine and report third information. The third information includes at least one of the following: handover delay from a source cell to the target cell, and a number of valid resources included or used by a handover process of the terminal device from the source cell to the target cell.

In some embodiments, the handover delay does not include a time period with the first resource invalid during the handover process.

FIG. 12 is a schematic structural diagram of a network device provided by an embodiment of the present disclosure. The network device 1200 shown in FIG. 12 is a network device corresponding to a source cell. The network device 1200 includes a transmitting module 1210. The transmitting module 1210 is configured to transmit first time information to a terminal device. The first time information is configured to indicate a valid time period of a first resource and/or a first control resource set (CORESET) time window, and the first resource is configured to be used by the terminal device to transmit uplink data to a target cell.

In some embodiments, the first time information includes at least one of the following: a start moment of the valid time period, an end moment of the valid time period, a time length of the valid time period, and activation time of the first resource.

In some embodiments, the start moment or the end moment is represented based on at least one of the following: relative time, including at least one of hyperframe number, system frame number and slot number of the target cell, and absolute time.

In some embodiments, the valid time period includes at least one consecutive time periods.

In some embodiments, the first time information is transmitted by the target cell, and transparently transmitted to the terminal device through a source cell, or the first time information is determined by a source cell based on time information transmitted by the target cell, and a time representation format of the first time information is different from that of the time information.

In some embodiments, the time representation format corresponding to the first time information is a time representation format supported by the terminal device.

FIG. 13 is a schematic structural diagram of a network device provided by another embodiment of the present disclosure. The network device 1300 shown in FIG. 13 is a network device corresponding to a target cell. The network device 1300 includes a transmitting module 1310. The first time information is configured to indicate a valid time period of a first resource and/or a first control resource set (CORESET) time window, and the first resource is configured to be used by a terminal device to transmit uplink data to the target cell.

In some embodiments, the first time information includes at least one of the following: a start moment of the valid time period, an end moment of the valid time period, a time length of the valid time period, and activation time of the first resource.

In some embodiments, the start moment or the end moment is represented based on at least one of the following: relative time, including at least one of hyperframe number, system frame number and slot number of the target cell, and absolute time.

In some embodiments, the valid time period includes at least one consecutive time periods.

In some embodiments, a handover completion indication transmitted by the target cell to the terminal device is transmitted based on dynamic scheduling.

In some embodiments, a handover completion indication transmitted by the target cell to the terminal device is transmitted based on semi-static scheduling.

In some embodiments, the handover completion indication is carried in a second resource, and a time-frequency position of the second resource is indicated by a handover command transmitted by a source cell, or determined based on a mapping relationship between time-frequency positions of the first resource and the second resource.

In some embodiments, the first resource corresponds to at least one hybrid automatic repeat request (HARQ) process, and each resource in the first resource is configured to transmit same uplink data.

In some embodiments, the first resource corresponds to at least one hybrid automatic repeat request (HARQ) process, and resources corresponding to a same HARQ process in the first resource are configured to transmit same uplink data.

In some embodiments, the first resource is a configured grant (CG) resource or a dynamic grant (DG) resource.

FIG. 14 shows a schematic structural diagram of a communication device according to an embodiment of the present disclosure. The communication device 1400 may be configured to implement the method described in the above method embodiments. The device 1400 may be a chip, a terminal device, or a base station.

The device 1400 may include at least one processor 1410. The at least one processor 1410 can support the device 1400 to implement the method described in the above embodiments for the method. The at least one processor 1410 may be a general-purpose processor or a special-purpose processor. For example, the processor is a central processing unit (CPU). Alternatively, the processor may be other general-purpose processor, a digital signal processor (DSP), an application specific integrated circuits (ASIC), a field programmable gate array (FPGA) or other programmable logic device, a discrete gate or a transistor logic device, a discrete hardware component, etc. The general-purpose processor may be a microprocessor or the processor may be any conventional processor, etc.

The device 1400 further includes at least one memory 1420 storing a program. The program, when executed by the processor 1410, causes the processor 1410 to implement the method described in the above embodiments. The memory 1420 is independent of or integrated in the processor 1410.

The device 1400 further includes a transceiver 1430. The processor 1410 communicates with other devices or chips via the transceiver 1430. For example, the processor 1410 transmits and receives data with other devices or chips via the transceiver 1430.

It should be understood that, in the embodiments of the present disclosure, the processor 1410 may adopt a general-purpose central processing unit (CPU), a microprocessor, an application specific integrated circuit (ASIC), or one or more integrated circuits, which are configured to execute relevant programs to implement the technical solutions provided by the embodiments of the present disclosure.

The memory 1420 may include a read-only memory and a random access memory, and provides instructions and data to the processor 1410. A portion of the processor 1410 may also include a non-volatile random access memory. For example, the processor 1410 may also store information of the device type.

In the implementation process, each operation of the above method may be completed by an integrated logic circuit of hardware or instructions in the form of software in the processor 1410. The method for requesting uplink transmission resources disclosed in conjunction with the embodiments of the present disclosure may be directly implemented by execution of a hardware processor, or by a combination of hardware and software modules in the processor. The software modules may be located in mature storage media in the art, such as random access memory, flash memory, read-only memory, programmable read-only memory, electrically erasable programmable memory, registers, etc. The storage medium is located in the memory 1420, and the processor 1410 reads the information in the memory 1420 and completes the operations of the above method in combination with its hardware. In order to avoid repetition, details are not described herein again.

It should be understood that, in the embodiments of the present disclosure, the processor 1410 may be a central processing unit (CPU). The processor may also be other general-purpose processor, digital signal processor (DSP), application specific integrated circuit (ASIC), field programmable gate programmable gate array (FPGA), or other programmable logic device, discrete gate or transistor logic device, discrete hardware component, etc. A general-purpose processor may be a microprocessor, or the processor may also be any conventional processor, etc.

A computer-readable storage medium configured to store a program is provided according to an embodiment of the present disclosure. The computer-readable storage medium is applicable to the terminal device or the network device according to the embodiments of the present disclosure, and the program causes a computer to implement the cell handover method according to the embodiments of the present disclosure.

A computer program product is provided according to an embodiment of the present disclosure. The computer program product includes a program. The computer program product is applicable to the terminal device or the network device according to the embodiments of the present disclosure, and the program causes a computer to implement the cell handover method according to the embodiments of the present disclosure.

A computer program is further provided according to an embodiment of the present disclosure. The computer program may be applicable to the terminal device or the network device according to the embodiments of the present disclosure, and the computer program causes a computer to implement the cell handover method according to the embodiments of the present disclosure.

In the embodiments of the present disclosure, the term "and/or" is only an association relationship describing the associated objects, which means that there can be three relationships. For example, A and/or B, which can mean that there are three situations: A alone, A and B, and B alone. In addition, the character "/" herein generally indicates an "or" relationship between the associated objects.

In the embodiments of the present disclosure, the magnitude of the reference numerals of the above processes does not imply the order of execution, and the order of execution of the processes should be determined by its function and inherent logic, and should not constitute any limitation on the implementation process of the embodiments of the present disclosure.

In the embodiments of the present disclosure, it should be understood that the disclosed system, device and method can be realized in other ways. For example, the embodiments for the device described above are only schematic. For example, the division of the units is only a logical function division. In actual implementation, there may be other division methods, such as a plurality of units or components can be combined or integrated into another system, or some features can be ignored or not implemented. In addition, the coupling or direct coupling or communication connection shown or discussed can be indirect coupling or communication connection through some interfaces, devices or units, which can be electrical, mechanical or other forms.

The units described as separate components may or may not be physically separated, and the components displayed as units may or may not be physical units, that is, they may be located in one place or distributed to multiple network units. A portion or all of the units can be selected according to actual needs to achieve the purpose of the embodiments of the present disclosure.

In addition, each respective functional unit in the embodiments of the present disclosure can be integrated into one processing unit, or each respective unit can exist physically, or two or more units can be integrated into one unit.

Through the description of the above embodiments, the above method embodiments can be implemented by means of software, hardware, firmware, or any combination thereof. In case of being implemented in software, it can be fully or partially implemented in the form of a computer program product. The computer program product includes one or more computer instructions. When the computer program instructions are loaded and executed on a computer, the flow or function described in the embodiment of the present disclosure is generated in whole or in part. The computer may be a general-purpose computer, a special-purpose computer, a computer network, or other programmable devices. The computer instructions may be stored in a computer-readable storage medium or transmitted from one computer-readable storage medium to another computer-readable storage medium. For example, the computer instructions may be transmitted from a website, a computer, a server or a data center to a website, computer, server or data to another website site, computer, server, or data center through wired (such as coaxial cable, optical fiber, digital subscriber line (DSL)) or wireless (such as infrared, wireless, microwave, etc.). The computer-readable storage medium may be any available medium that a computer can read or a data storage device such as a server, data center, etc. which contains one or more available media integration. The available medium may be a magnetic medium such as a floppy disk, a hard disk, a magnetic tape, etc., or an optical medium such as a digital video disc (DVD) or a semiconductor medium such as a solid state disk (SSD), etc.

The above is only the specific embodiments of the present disclosure, but the protection scope of the present disclosure is not limited thereto. Any variations or substitutions that can be easily conceived by those skilled in the art within the technical scope disclosed by the present disclosure, should be included in the protection scope of the present disclosure. Therefore, the protection scope of the present disclosure should be based on the protection scope of the claims.

## Claims

1. A cell handover method, comprising:
receiving, by a terminal device, first time information, wherein the first time information is configured to indicate a valid time period of a first resource and/or a first control resource set (CORESET) time window, and the first resource is configured to be used by the terminal device to transmit uplink data to a target cell.

2. The method according to claim 1, wherein the first time information includes at least one of the following:
a start moment of the valid time period;
an end moment of the valid time period;
a time length of the valid time period; and
activation time of the first resource.

3. The method according to claim 2, wherein the start moment or the end moment is represented based on at least one of the following:
relative time, including at least one of hyperframe number, system frame number and slot number of the target cell; and
absolute time.

4. The method according to any one of claims 1 to 3, wherein the valid time period includes at least one consecutive time periods.

5. The method according to any one of claims 1 to 4, wherein:
the first time information is transmitted by the target cell, and transparently transmitted to the terminal device through a source cell; or
the first time information is determined by a source cell based on time information transmitted by the target cell, and a time representation format of the first time information is different from that of the time information.

6. The method according to claim 5, wherein the time representation format corresponding to the first time information is a time representation format supported by the terminal device.

7. The method according to any one of claims 1 to 6, wherein whether the first resource is invalid is determined based on a handover timer, and a start moment of the handover timer is determined based on at least one of the following:
a start moment of the valid time period; and
a transmission moment of a first valid resource in the first resource.

8. The method according to any one of claims 1 to 7, wherein whether the first resource is invalid is determined based on a handover timer, and running time of the handover timer is associated with the valid time period.

9. The method according to claim 8, wherein in response to the running time of the handover timer reaching a time period outside the valid time period, the handover timer pauses running.

10. The method according to any one of claims 1 to 9, wherein whether the first resource is invalid is determined based on a handover timer, and running time of the handover timer is not associated with the valid time period.

11. The method according to any one of claims 1 to 10, wherein a handover completion indication transmitted by the target cell to the terminal device is transmitted based on dynamic scheduling.

12. The method according to any one of claims 1 to 10, wherein a handover completion indication transmitted by the target cell to the terminal device is transmitted based on semi-static scheduling.

13. The method according to claim 12, wherein the handover completion indication is carried in a second resource, and a time-frequency position of the second resource is indicated by a handover command transmitted by a source cell, or determined based on a mapping relationship between time-frequency positions of the first resource and the second resource.

14. The method according to any one of claims 1 to 13, further comprising:
after the terminal device transmits uplink data to the target cell based on the first resource, starting, by the terminal device, a first timer; and
during a running period of the first timer, detecting, by the terminal device, a handover completion indication.

15. The method according to claim 14, wherein:
after the first timer expires, in response to the first resource still including a valid resource, the terminal device transmits uplink data to the target cell based on the valid resource;
after the first timer expires, in response to the first resource not including a valid resource and the handover timer not expiring, the terminal device establishes a connection with the target cell by random access; or
after the first timer expires, in response to the first resource not including a valid resource and the handover timer expiring, the terminal device performs cell reselection.

16. The method according to any one of claims 1 to 15, wherein the first resource corresponds to at least one hybrid automatic repeat request (HARQ) process, and each resource in the first resource is configured to transmit same uplink data.

17. The method according to any one of claims 1 to 15, wherein the first resource corresponds to at least one hybrid automatic repeat request (HARQ) process, and resources corresponding to a same HARQ process in the first resource are configured to transmit same uplink data.

18. The method according to any one of claims 1 to 17, further comprising:
determining and reporting, by the terminal device, third information, wherein the third information includes at least one of the following:
handover delay from a source cell to the target cell; and
a number of valid resources included or used by a handover process of the terminal device from the source cell to the target cell.

19. The method according to claim 18, wherein the handover delay does not include a time period with the first resource invalid during the handover process.

20. The method according to claim 19, wherein the first resource is a configured grant (CG) resource or a dynamic grant (DG) resource.

21. A cell handover method, comprising:
transmitting, by a source cell, first time information to a terminal device, wherein the first time information is configured to indicate a valid time period of a first resource and/or a first control resource set (CORESET) time window, and the first resource is configured to be used by the terminal device to transmit uplink data to a target cell.

22. The method according to claim 21, wherein the first time information includes at least one of the following:
a start moment of the valid time period;
an end moment of the valid time period;
a time length of the valid time period; and
activation time of the first resource.

23. The method according to claim 22, wherein the start moment or the end moment is represented based on at least one of the following:
relative time, including at least one of hyperframe number, system frame number and slot number of the target cell; and
absolute time.

24. The method according to any one of claims 21 to 23, wherein the valid time period includes at least one consecutive time periods.

25. The method according to any one of claims 21 to 24, wherein:
the first time information is transmitted by the target cell, and transparently transmitted to the terminal device through the source cell; or
the first time information is determined by the source cell based on time information transmitted by the target cell, and a time representation format of the first time information is different from a time representation format of the time information.

26. The method according to claim 25, wherein the time representation format corresponding to the first time information is a time representation format supported by the terminal device.

27. A cell handover method, comprising:
transmitting, by a target cell, first time information to a source cell, wherein the first time information is configured to indicate a valid time period of a first resource and/or a first control resource set (CORESET) time window, and the first resource is configured to be used by a terminal device to transmit uplink data to the target cell.

28. The method according to claim 27, wherein the first time information includes at least one of the following:
a start moment of the valid time period;
an end moment of the valid time period;
a time length of the valid time period; and
activation time of the first resource.

29. The method according to claim 28, wherein the start moment or the end moment is represented based on at least one of the following:
relative time, including at least one of hyperframe number, system frame number and slot number of the target cell; and
absolute time.

30. The method according to any one of claims 27 to 29, wherein the valid time period includes at least one consecutive time periods.

31. The method according to any one of claims 27 to 30, wherein a handover completion indication transmitted by the target cell to the terminal device is transmitted based on dynamic scheduling.

32. The method according to any one of claims 27 to 30, wherein a handover completion indication transmitted by the target cell to the terminal device is transmitted based on semi-static scheduling.

33. The method according to claim 32, wherein the handover completion indication is carried in a second resource, and a time-frequency position of the second resource is indicated by a handover command transmitted by a source cell, or determined based on a mapping relationship between time-frequency positions of the first resource and the second resource.

34. The method according to claim 27 to 33, wherein the first resource corresponds to at least one hybrid automatic repeat request (HARQ) process, and each resource in the first resource is configured to transmit same uplink data.

35. The method according to claim 27 to 33, wherein the first resource corresponds to at least one hybrid automatic repeat request (HARQ) process, and resources corresponding to a same HARQ process in the first resource are configured to transmit same uplink data.

36. The method according to any one of claims 27 to 35, wherein the first resource is a configured grant (CG) resource or a dynamic grant (DG) resource.

37. A terminal device, comprising:
a receiving module, configured to receive first time information, wherein the first time information is configured to indicate a valid time period of a first resource and/or a first control resource set (CORESET) time window, and the first resource is configured to be used by the terminal device to transmit uplink data to a target cell.

38. A network device, wherein the network device is a network device corresponding to a source cell, and the network device comprises:
a transmitting module, configured to transmit first time information to a terminal device, wherein the first time information is configured to indicate a valid time period of a first resource and/or a first control resource set (CORESET) time window, and the first resource is configured to be used by the terminal device to transmit uplink data to a target cell.

39. A network device, wherein the network device is a network device corresponding to a target cell, and the network device comprises:
a transmitting module, configured to transmit first time information to a source cell, wherein the first time information is configured to indicate a valid time period of a first resource and/or a first control resource set (CORESET) time window, and the first resource is configured to be used by a terminal device to transmit uplink data to the target cell.

40. A terminal device, comprising a transceiver, a memory and a processor, wherein the memory is configured to store a program, and the processor is configured to call the program from the memory, control the transceiver to receive or transmit a signal, and cause the terminal device to implement the method according to any one of claims 1 to 20.

41. A network device, comprising a transceiver, a memory and a processor, wherein the memory is configured to store a program, and the processor is configured to call the program from the memory, control the transceiver to receive or transmit a signal, and cause the terminal device to implement the method according to any one of claims 21 to 26.

42. A network device, comprising a transceiver, a memory and a processor, wherein the memory is configured to store a program, and the processor is configured to call the program from the memory, control the transceiver to receive or transmit a signal, and cause the terminal device to implement the method according to any one of claims 27 to 36.

43. A device, comprising a processor, configured to call a program from a memory, and cause the device to implement the method according to any one of claims 1 to 20, claims 21 to 26, and claims 27 to 36.

44. A chip, comprising a processor, configured to call a program from a memory, and cause a device mounted with the chip to implement the method according to any one of claims 1 to 20, claims 21 to 26, and claims 27 to 36.

45. A computer-readable storage medium, wherein a program is stored on the computer-readable storage medium, to cause a computer to implement the method according to any one of claims 1 to 20, claims 21 to 26, and claims 27 to 36.

46. A computer program product, comprising a program causing a computer to implement the method according to any one of claims 1 to 20, claims 21 to 26, and claims 27 to 36.

47. A computer program, causing a computer to implement the method according to any one of claims 1 to 20, claims 21 to 26, and claims 27 to 36.
